# DEMANDE DE BREVET EUROPEEN

(11) **EP 1 826 379 A1**
(43) Date de publication de la demande: **29.08.2007**
(21) Numéro de dépôt: 07290168.9
(22) Date de dépôt: 08.02.2007
(51) Int. Cl.: F02D 35/02, F02D 41/14, F02D 41/22

(54) **Procédé de contrôle de la phase de combustion d'un moteur à combustion interne, notamment moteur suralimenté à injection directe de type essence**

(30) Priorité: 28.02.2006 FR 0601785
(71) Demandeur: Institut Français du Pétrole, 92852 Rueil Malmaison Cédex (FR)
(72) Inventeur: Vangraefschepe, Franck, 92500 Rueil-Malmaison (FR); Zaccardi, Jean-Marc, 74600 Seynod (FR)

(57) **Abrégé**

Procédé de contrôle de la combustion d'un moteur à combustion interne, en particulier moteur suralimenté à injection directe, notamment de type Essence, dans lequel le moteur comprend au moins un cylindre (12) avec une chambre de combustion (14) à l'intérieur de laquelle se réalise une étape de compression suivie d'une étape de combustion d'un mélange carburé par un moyen d'allumage commandé (34), caractérisé en ce qu'il consiste à mesurer une grandeur liée à au moins un paramètre représentatif de l'état du mélange carburé durant lesdites étapes ; à déterminer une valeur qui dépend de l'amplitude de la grandeur mesurée ; à comparer la valeur déterminée à au moins une valeur-seuil représentative de la grandeur liée audit paramètre représentatif de l'état conventionnel du mélange carburé durant lesdites étapes ; à détecter le début d'une combustion anormale lorsque la valeur déterminée dépasse ladite valeur-seuil et lorsque le moyen d'allumage n'est pas actionné ; à contrôler le déroulement de la combustion anormale détectée dans la chambre de combustion.

## Description

La présente invention se rapporte à un procédé de contrôle de la phase de combustion d'un moteur à combustion interne.

Elle concerne plus particulièrement un procédé pour un moteur à allumage commandé et préférentiellement de type Essence et notamment un moteur suralimenté avantageusement à injection directe.

Ce type de moteur comprend au moins un cylindre comportant une chambre de combustion délimitée par la paroi latérale interne du cylindre, par le haut du piston qui coulisse dans ce cylindre et par la culasse. Généralement, un mélange carburé est renfermé dans cette chambre de combustion et subit une étape de compression puis une étape de combustion sous l'effet d'un allumage commandé, comme une bougie, ces étapes étant regroupées sous le vocable de phase de combustion dans la suite de la description.

Il a pu être constaté que ce mélange carburé peut subir différents types de combustion et que ces types de combustion sont la source de différents niveaux de pression ainsi que de contraintes mécaniques et/ou thermiques dont certains peuvent endommager gravement le moteur.

La première combustion, dite combustion conventionnelle ou combustion normale, est le résultat de la propagation de la combustion d'un mélange carburé comprimé lors d'une étape préalable de compression du moteur. Cette combustion se propage normalement selon un front de flamme à partir de l'étincelle générée à la bougie et ne risque pas de détériorer le moteur.
Un autre type de combustion est une combustion avec cliquetis, qui résulte d'une auto-inflammation indésirable dans la chambre de combustion. Ainsi, après l'étape de compression du mélange carburé, la bougie est actionnée pour permettre l'allumage de ce mélange carburé. Sous l'effet de la pression générée par le piston et de la chaleur dégagée par le début de la combustion du mélange carburé, il se produit une auto-inflammation brutale et localisée d'une partie du mélange carburé comprimé avant que n'arrive le front de flamme issu de l'allumage du mélange carburé par la bougie. Ce mécanisme, dénommé cliquetis, conduit à une augmentation locale de la pression et peut engendrer, en cas de répétitions, des effets destructifs sur le moteur et principalement au niveau du piston.
Enfin, un autre type de combustion est une combustion anormale due à un pré-allumage du mélange carburé avant que la bougie n'initie l'allumage du mélange carburé présent dans la chambre de combustion.
Cette combustion anormale affecte principalement les moteurs qui sont le résultat d'une opération de "miniaturisation", plus connu sous le terme anglais de "downsizing". Cette opération vise à diminuer la taille et/ou la cylindrée du moteur tout en conservant la même puissance et/ou le même couple que des moteurs conventionnels. Généralement, ce type de moteurs est principalement de type essence et est fortement suralimenté.
Il a pu être constaté que cette combustion anormale se réalise à fortes charges et généralement lors des bas régimes de fonctionnement du moteur, lorsque le calage de la combustion du mélange carburé ne peut pas être l'optimum à cause du cliquetis. Compte tenu des fortes pressions et des températures élevées atteintes dans la chambre de combustion par la suralimentation, un démarrage de combustion anormale peut se produire, sporadiquement ou de façon continue, bien avant le moment où se réalise l'allumage du mélange carburé par la bougie. Cette combustion se caractérise par une première phase de propagation de flamme qui est calée trop tôt par rapport à celle d'une combustion conventionnelle. Cette phase de propagation peut être interrompue par une auto-inflammation qui va concerner une grande partie du mélange carburé présent dans la chambre de combustion.
Dans le cas où cette combustion anormale se produit de façon répétitive de cycle-moteur à cycle-moteur et se réalise à partir d'un point chaud du cylindre par exemple, celle-ci est dénommée "pré-allumage". Si cette combustion se produit de manière violente, aléatoire et sporadique, elle est appelée "claquement" (ou "rumble").
Cette dernière combustion anormale entraîne des niveaux de pressions très élevés (120 à 250 bars) ainsi qu'une augmentation de transferts thermiques qui peuvent entraîner une destruction partielle ou totale de l'équipage mobile du moteur, comme le piston ou la bielle.

La présente invention se propose donc de pouvoir identifier le début d'une combustion anormale, aussi bien de type "pré-allumage" que du type "rumble", avec les dispositifs et systèmes couramment utilisés dans les moteurs. Après cette identification, l'invention propose de prendre ensuite les mesures permettant d'empêcher que cette combustion anormale ne se développe suffisamment dans le cycle moteur pour avoir des conséquences destructrices sur celui-ci.

A cet effet, la présente invention concerne un procédé de contrôle de la combustion d'un moteur à combustion interne, en particulier moteur suralimenté à injection directe, notamment de type Essence, dans lequel le moteur comprend au moins un cylindre avec un moyen d'alimentation en carburant et un moyen d'admission avec une soupape d'admission ainsi qu'un moyen d'échappement avec une soupape d'échappement, ledit cylindre comprenant une chambre de combustion à l'intérieur de laquelle se réalisent une étape de compression suivie d'une étape de combustion d'un mélange carburé par un moyen d'allumage commandé, caractérisé en ce qu'il consiste :
- à mesurer une grandeur liée à au moins un paramètre représentatif de l'état du mélange carburé durant lesdites étapes,
- à déterminer une valeur qui dépend de l'amplitude de la grandeur mesurée,
- à comparer la valeur déterminée à au moins une valeur-seuil représentative de la grandeur liée audit paramètre représentatif de l'état conventionnel du mélange carburé durant lesdites étapes,
- à détecter le début d'une combustion anormale lorsque la valeur déterminée dépasse ladite valeur-seuil et lorsque le moyen d'allumage n'est pas actionné,
- à contrôler le déroulement de la combustion anormale détectée dans la chambre de combustion.

Ce procédé peut consister à contrôler la combustion anormale à un angle de vilebrequin compris entre 5 et 10° après l'angle de vilebrequin où a été détecté le début de la combustion anormale.

Il peut aussi consister à introduire dans la chambre de combustion un agent pour contrôler la combustion anormale.

Cet agent peut contenir du carburant et/ou de l'eau et/ou du dioxyde de carbone.

Le procédé peut également consister à faire chuter la pression à l'intérieur de la chambre de combustion pour contrôler la combustion anormale.

Il peut consister à ouvrir au moins une soupape additionnelle pour faire chuter la pression à l'intérieur de la chambre de combustion.

Il peut également consister à ouvrir au moins une des soupapes pour faire chuter la pression à l'intérieur de la chambre de combustion.

La grandeur peut correspondre à la pression du mélange carburé dans la chambre de combustion.

La grandeur peut correspondre au courant d'ionisation du mélange carburé dans la chambre de combustion.

La grandeur peut correspondre aux vibrations générées par le mélange carburé dans la chambre de combustion.

Les autres caractéristiques et avantages de l'invention apparaîtront à la lecture de la description donnée ci-après en se référant aux dessins annexés où :
- la figure 1 montre un moteur utilisant le procédé de contrôle de la phase de combustion selon l'invention et
- la figure 2 montre des courbes de pressions pour une phase de combustion classique et pour une combustion anormale.

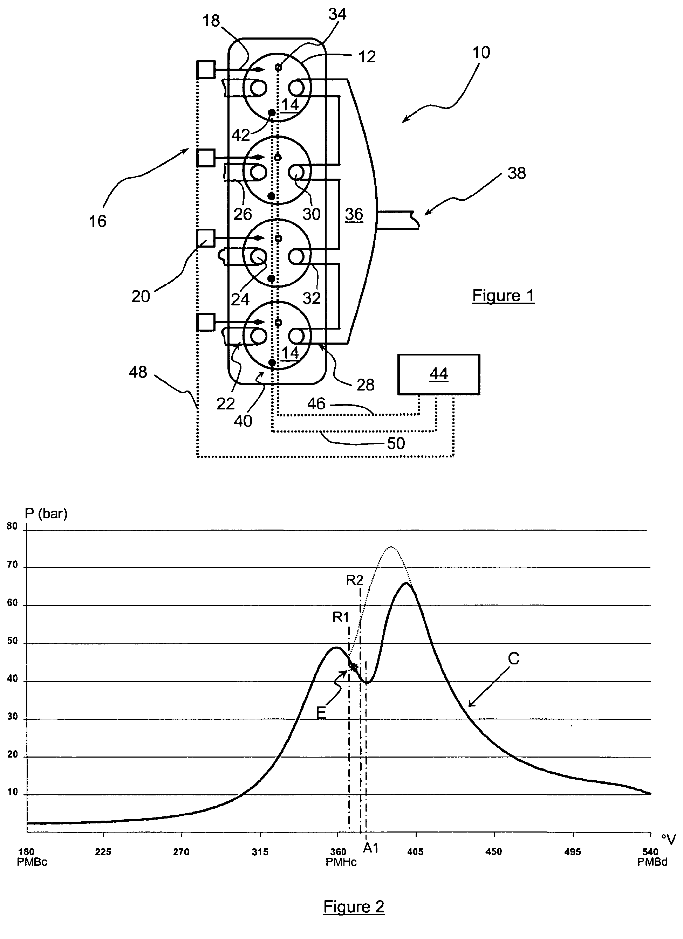

Sur la figure 1, il est illustré un exemple d'un moteur à combustion interne 10 suralimenté à allumage commandé de type Essence. Bien entendu, tout autre type de moteur à allumage commandé, tel que celui fonctionnant avec du gaz, comme du GNV ou du GPL, peut également être utilisé. Ce moteur comprend au moins un cylindre 12 avec une chambre de combustion 14 délimitée généralement par la paroi intérieure du cylindre, la partie de la culasse en regard du piston et le haut du piston. C'est dans cette chambre que se produit, entre autres, la combustion d'un mélange d'air, de préférence suralimenté, et de carburant, ici de l'essence.

Le cylindre comprend au moins un moyen d'alimentation en carburant sous pression 16, par exemple sous la forme d'un injecteur de carburant 18 qui débouche dans la chambre de combustion et qui est contrôlé par une vanne 20. Ce cylindre comprend également au moins un moyen d'admission d'air 22 avec une soupape 24 associée à une tubulure d'admission 26, au moins un moyen d'échappement des gaz brûlés 28 avec une soupape 30 et une tubulure d'échappement 32, et au moins un moyen d'allumage 34, comme une bougie, qui permet de générer une ou plusieurs étincelles permettant d'enflammer le mélange carburé présent dans la chambre de combustion.
Les tubulures 32 des moyens d'échappement 28 de ce moteur sont raccordées à un collecteur d'échappement 36 lui-même connecté à une ligne d'échappement 38. Un dispositif de suralimentation (non représenté), tel qu'un turbocompresseur ou un compresseur volumétrique, permet d'introduire un air d'admission sous pression (ou air suralimenté) dans les chambres de combustion 14 par les tubulures d'admission 26.

Le moteur comprend des moyens de mesure 40 d'au moins une grandeur liée à la phase de combustion (étape de compression suivie d'une étape de combustion) du mélange carburé dans la chambre de combustion 14. Plus particulièrement, il comprend des moyens de mesure d'au moins une grandeur liée à un paramètre représentatif de l'état du mélange carburé durant lesdites étapes.
Plus précisément, le paramètre représentatif de l'état du mélange carburé considéré dans la suite de la description est le paramètre de la pression interne du cylindre. Ainsi, dans l'exemple illustré à la figure 1, ces moyens comprennent un capteur de pression 42 qui est placé en regard de la chambre de combustion et qui permet de mesurer l'évolution de la pression régnant à l'intérieur de cette chambre.
Bien entendu, tout autre moyen peut être utilisé et cela sans sortir du cadre de l'invention, comme des sondes d'ionisation qui génèrent un signal représentatif du courant d'ionisation du mélange carburé en cours de combustion, ou des capteurs optiques. A titre d'autre exemple, ces moyens peuvent également comprendre des moyens de détection de cliquetis disposés habituellement sur le carter cylindre du moteur, comme un accéléromètre qui permet de générer un signal représentatif d'ondes de vibration.
De manière connue en soi, le moteur comprend une unité de calcul et de commande 44, dénommée calculateur-moteur, qui permet de contrôler le fonctionnement de ce moteur. Plus particulièrement, ce calculateur-moteur est relié directement ou indirectement par des conducteurs aux différents capteurs, sondes et/ou moyens de détection que comporte le moteur de façon à pouvoir recevoir les signaux émis par ceux-ci, comme la température de l'eau, la température de l'huile ou la pression dans la chambre de combustion. Ces signaux sont traités par calcul et l'unité commande ensuite par des lignes de commandes les organes de ce moteur pour assurer son bon fonctionnement.
Ainsi, dans le cas de l'exemple montré à la figure 1, les bougies 34 sont reliées par des lignes de commande 46 au calculateur-moteur de façon à commander le moment de l'allumage du mélange carburé et les vannes 20 de commande des injecteurs 18 sont raccordées par des lignes de commande 48 au calculateur 44 pour commander les paramètres d'injection de carburant dans les chambres de combustion, comme la quantité de carburant injecté ou le moment d'injection. Les capteurs de pression 42 sont connectés par un conducteur 50 à ce même calculateur pour lui envoyer les signaux représentatifs de la pression régnant dans les chambres de combustion.
Ce calculateur-moteur comprend en outre des cartographies ou des tables de données qui permettent d'évaluer les paramètres nécessaires à son fonctionnement et cela en fonction des différentes conditions de fonctionnement du moteur, comme le régime du moteur ou la puissance demandée par le conducteur. Ainsi, certaines de ces cartographies répertorient, en fonction de ces différentes conditions de fonctionnement, l'évolution de grandeurs liées à au moins un paramètre représentatif de l'état du mélange carburé pendant la phase de combustion, comme la grandeur liée à la pression régnant à l'intérieur du cylindre, plus communément appelée pression cylindre.

Comme mieux visible sur la figure 2, la courbe C (en trait plein) montre l'évolution conventionnelle de la pression (en bar) dans la chambre de combustion, à titre uniquement d'exemple non limitatif, en fonction de l'angle de vilebrequin (en °V) lors d'une phase de combustion conventionnelle.
Durant cette phase de combustion conventionnelle, le piston comprime le mélange carburé présent dans la chambre de combustion entre le Point Mort Bas compression (PMBc à environ 180°V) jusqu'au voisinage du Point Mort Haut compression (PMHc à environ 360°V). Au voisinage du PMH (à plus ou moins quelques degrés par rapport au PMH), une étincelle E est générée à la bougie pour initier la combustion. Cette initiation de combustion se concrétise par une augmentation de la pression cylindre P, comme visible à 380°V (point A1). La chaleur dégagée par cette combustion est transformée en travail durant l'étape de combustion jusqu'au PMBd (du Point Mort Bas détente), où la pression dans la chambre de combustion sera voisine de la pression atmosphérique.
Pour pouvoir contrôler toute combustion anormale qui se déroule dans la chambre de combustion, les moyens de mesure de la pression à l'intérieur des chambre de combustion 14, ici les capteurs de pression 42, mesurent la pression du mélange carburé dans ces chambres et cela durant la phase de combustion comprise entre le PMBc et le PMBd (étape de compression suivie d'une étape de combustion). Cette information de pression est envoyée par la ligne 50 au calculateur-moteur 44. Ce calculateur détermine, généralement par calcul, une valeur qui dépend de l'amplitude de la pression mesurée. A titre uniquement d'exemple, ce calculateur utilise le signal de pression en fonction de l'angle de vilebrequin associé à la loi du volume du cylindre. Plus précisément, la valeur est déterminée par un calcul qui prend en compte la pression ainsi que la dérivé de volume associées au volume et à la dérivé de pression, ce qui permet de connaître le dégagement d'énergie du mélange carburé contenu dans la chambre de combustion. Cette valeur est ensuite comparée avec une valeur-seuil qui est représentative de l'évolution d'au moins un paramètre représentatif de l'état du mélange carburé pour une phase de combustion conventionnelle. Cette valeur-seuil est avantageusement contenue dans les tables de données du calculateur. De même, cette valeur-seuil est préalablement calculée et stockée dans les tables en tenant compte du signal de pression en fonction de l'angle de vilebrequin associé à la loi du volume du cylindre. Ceci permet au calculateur-moteur de détecter le début d'une combustion anormale de type "rumble" ou du type "pré-allumage" dans la chambre de combustion, d'une part, lorsque la valeur déterminée dépasse la valeur-seuil, ce qui démontre l'existence d'une combustion, et, d'autre part, lorsque ce dépassement se produit précocement dans le cycle, c'est-à-dire avant la production de l'étincelle à la bougie. Ainsi, une combustion anormale est décelée lorsqu'il y a une combustion et que cette combustion se produit avant l'allumage du mélange carburé par la bougie.

Comme indiqué par la courbe en traits interrompus sur la figure 2 illustrant le déroulement d'une combustion anormale et son contrôle, il existe, entre l'initiation de la combustion du mélange carburé et son auto-inflammation, une phase de propagation de flamme de quelques degrés, comprise entre 5° et 10° V, telle qu'indiquée par R1 et R2 sur la figure. Pendant cet intervalle, le calculateur peut détecter le début de la combustion et sa présence précoce par rapport à la production de l'étincelle. En cas de combustion anormale, ce calculateur lance ensuite les actions nécessaires au contrôle de cette combustion en évitant la poursuite d'une telle combustion.
Par contrôle de la combustion anormale, il est entendu non seulement la possibilité de maîtriser le déroulement de cette combustion pour éviter les augmentations brutales de pressions destructrices mais aussi d'arrêter complètement une telle combustion, telle que par étouffement.
A titre préférentiel, ce contrôle de la combustion est réalisé par une réinjection de carburant à l'angle de vilebrequin R2 par les injecteurs 18. Plus précisément, le calculateur commande les vannes 20 de façon à ce que l'injecteur du cylindre concerné permette d'introduire dans la chambre de combustion une quantité de carburant sous forme liquide. La quantité de carburant réinjectée dépend de la constitution du moteur et peut aller de 10% à 200% de la quantité de carburant initialement introduite dans cette chambre de combustion. De ce fait, le carburant réinjecté sert à contrarier la flamme qui commence à se déployer lors de la combustion anormale. Cette réinjection permet soit de souffler cette flamme, soit d'étouffer cette flamme par augmentation de la richesse du mélange carburé. De plus, le carburant injecté sous forme liquide utilise la chaleur présente autour de cette flamme pour se vaporiser et les conditions de température autour de la flamme vont baisser en retardant la combustion du mélange carburé et surtout son auto-inflammation.
Après cette injection de carburant, la pression dans le cylindre augmente mais moins brutalement. Cette pression décroît ensuite jusqu'à rejoindre la courbe C pour atteindre un niveau compatible avec le niveau de pression d'une combustion conventionnelle.

Grâce à cela tout développement d'une combustion anormale avec une grande vitesse de combustion et des pressions élevées est prohibé.

Bien entendu, la mise en oeuvre des moyens pour contrôler la combustion anormale se fera à chaque cycle durant lequel une telle combustion sera détectée par le calculateur.

Les actions du procédé telles que décrites ci-dessus peuvent être combinées à d'autres actions plus lentes, telles que la fermeture du papillon, pour empêcher que les conditions de pression de la chambre de combustion soient favorables à une combustion anormale dans les cycles qui suivent.

La présente invention n'est pas limitée aux exemples de réalisation décrits ci-dessus mais englobe toutes variantes et tous équivalents. Notamment et cela sans sortir du cadre de l'invention, d'autres agents pour arrêter la combustion anormale peuvent être introduits dans la chambre de combustion. Ainsi, ces agents peuvent être de l'eau sous forme vapeur ou liquide, ou du dioxyde de carbone. Dans ce cas, le moteur comprend des injecteurs spécifiques additionnels pour l'introduction de ces agents en association avec un circuit dédié (pompe, réservoir,...).
Il peut également être envisagé de contrôler la combustion anormale en faisant baisser la pression interne de la chambre de combustion en effectuant une décharge de pression en ouvrant une soupape de décharge. Cette soupape de décharge peut être soit une soupape additionnelle soit la soupape d'admission 24 et/ou la soupape d'échappement 30.
De plus, la présente invention peut également concerner un moteur à allumage commandé et à injection indirecte. Dans ce cas, le contrôle du déroulement de la combustion anormale se fera par l'utilisation d'un injecteur spécifique (carburant, eau, CO₂), comme évoqué ci-dessus, ou par ouverture de soupape.

## Revendications

1. Procédé de contrôle de la combustion d'un moteur à combustion interne, en particulier moteur suralimenté à injection directe, notamment de type Essence, dans lequel le moteur comprend au moins un cylindre (12) avec un moyen d'alimentation en carburant (16) et un moyen d'admission (22) avec une soupape d'admission (24) ainsi qu'un moyen d'échappement (28) avec une soupape d'échappement (30), ledit cylindre comprenant une chambre de combustion (14) à l'intérieur de laquelle se réalisent une étape de compression suivie d'une étape de combustion d'un mélange carburé par un moyen d'allumage commandé (34), **caractérisé en ce qu'**il consiste :
- à mesurer une grandeur liée à au moins un paramètre représentatif de l'état du mélange carburé durant lesdites étapes,
- à déterminer une valeur qui dépend de l'amplitude de la grandeur mesurée,
- à comparer la valeur déterminée à au moins une valeur-seuil représentative de la grandeur liée audit paramètre représentatif de l'état conventionnel du mélange carburé durant lesdites étapes,
- à détecter le début d'une combustion anormale lorsque la valeur déterminée dépasse ladite valeur-seuil et lorsque le moyen d'allumage n'est pas actionné,
- à contrôler le déroulement de la combustion anormale détectée dans la chambre de combustion.

2. Procédé de contrôle de la combustion selon la revendication 1, **caractérisé en ce qu'**il consiste à contrôler la combustion anormale à un angle de vilebrequin (R2) compris entre 5 et 10° après l'angle de vilebrequin (R1) où a été détecté le début de la combustion anormale.

3. Procédé de contrôle de la combustion selon la revendication 1 ou 2, **caractérisé en ce qu'**il consiste à introduire dans la chambre de combustion un agent pour contrôler la combustion anormale.

4. Procédé de contrôle de la combustion selon la revendication 3, **caractérisé en ce qu'**il consiste à introduire un agent contenant du carburant dans la chambre de combustion pour contrôler la combustion.

5. Procédé de contrôle de la combustion selon la revendication 3, **caractérisé en ce qu'**il consiste à introduire un agent contenant de l'eau dans la chambre de combustion (14) pour contrôler la combustion.

6. Procédé de contrôle de la combustion selon la revendication 3, **caractérisé en ce qu'**il consiste à introduire un agent contenant du dioxyde de carbone dans la chambre de combustion (14) pour contrôler la combustion.

7. Procédé de contrôle de la combustion selon la revendication 1 ou 2, **caractérisé en ce qu'**il consiste à faire chuter la pression à l'intérieur de la chambre de combustion (14) pour contrôler la combustion anormale.

8. Procédé de contrôle de la combustion selon la revendication 7, **caractérisé en ce qu'**il consiste à ouvrir au moins une soupape additionnelle pour faire chuter la pression à l'intérieur de la chambre de combustion (14).

9. Procédé de contrôle de la combustion selon la revendication 7, **caractérisé en ce qu'**il consiste à ouvrir au moins une des soupapes (24, 30) pour faire chuter la pression à l'intérieur de la chambre de combustion (14).

10. Procédé de contrôle de la combustion selon la revendication 1, **caractérisé en ce que** la grandeur correspond à la pression du mélange carburé dans la chambre de combustion.

11. Procédé de contrôle de la combustion selon la revendication 1, **caractérisé en ce que** la grandeur correspond au courant d'ionisation du mélange carburé dans la chambre de combustion.

12. Procédé de contrôle de la combustion selon la revendication 1, **caractérisé en ce que** la grandeur correspond aux vibrations générées par le mélange carburé dans la chambre de combustion.
